# EUROPEAN PATENT SPECIFICATION

(11) **EP 3 587 549 B1**
(45) Date of publication and mention of the grant of the patent: **18.10.2023**
(21) Application number: 19182183.4
(22) Date of filing: 25.06.2019
(51) Int. Cl.: C12G 1/032, C12G 1/02

(54) **FERMENTATION METHOD**
FERMENTATIONSVERFAHREN
PROCÉDÉ DE FERMENTATION

(30) Priority: 29.06.2018 IT 201800006829
(43) Date of publication of application: 01.01.2020
(73) Proprietor: Noform S.r.l., 30020 Meolo (VE) (IT)
(72) Inventor: CROSATO, REMO, 30020 MEOLO (IT)
(74) Representative: Citron, Massimiliano

(56) References cited:
- EP-A1- 1 964 914
- EP-A1- 2 060 623
- WO-A1-2010/105676
- WO-A1-2011/161495
- WO-A1-2012/056433
- WO-A2-2012/066468

## Description

The invention concerns a fermentation method and an apparatus to carry out the method. Although the invention is useful for the treatment of any vegetable product in the form of crushed berries, the following description will refer to wine-making, a sector in which the invention has proved to be particularly effective.

Wine-making takes place with the help of special tanks wherein the must is introduced to ferment. The fermentation process generates a great quantity of gaseous products, especially CO₂, which actively participate to the success of a good wine. The gases released from the must push the marc and each solid part upwards where they compact and form a solid layer, called "cap". Wine-making methods adequately exploit the gases of the fermentation. In WO 20061087601 a wine storage tank is described which controls the gas pressure inside it, adjusting the pressure to an almost constant value. In WO 98145403 the gases are used to mix the cap and avoid solidification thereof.

EP 20 58 384 describes another fermentation method. Fermentation gas is accumulated under pressure in an auxiliary cell and after decreasing the gas pressure in the main tank, the cell is connected to the tank at one point under the cap so that, thanks to the differential pressure between the two, the spontaneous transfer of the gaseous products takes place into the liquid mass, so that going up they hit the cap.

WO 2011/161495 discloses an apparatus for breaking the marc cap by gas injection. EP 1 964 914 discloses an apparatus for pumping-over must during fermentation.

The object of the present invention is to present a method and an apparatus for the treatment of a vegetable product in the form of crushed berries, preferentially must, which improves this state of the art.

This object is achieved by a method as claimed in claim 1. The preferred variants, single or combined, of the method are listed in the dependent method claims.

The method for treating a vegetable product in the form of crushed material comprises the steps of
(i) storing the crushed material in a first tank so as to let it ferment therein and form a cap of solid parts floating on a liquid mass;
(ii) connecting a second tank to the first to capture in it gaseous products of fermentation;
(iii) connecting the second tank to the first tank at a point under the cap so that, thanks to the pressure differential between the two tanks, the spontaneous transfer of gaseous products into the liquid mass takes place, so that while going up they hit the cap; and
(iv) mechanically pumping the gaseous products generated in the first tank into the second tank.

According to a preferred step, the gaseous products generated in the first tank are mechanically pumped into an isolated storage tank.

The method of the invention can be carried out with the apparatus according to claim 8.

The preferred variants, single or combined, of the apparatus are listed in the apparatus's dependent claims. In particular
the processing device is programmed to decrease the gaseous pressure in the first tank by operating the third valve means; and/or
the processing device is interfaced with a pressure sensor, adapted to measure the gas pressure in the first tank, and/or with a pressure sensor adapted for measuring the gas pressure present in the second tank; and/or
the processing device is programmed to control the gas pressure in the second tank via the relative sensor and drive the opening of the second valve means when such pressure reaches or exceeds a preset threshold; and/or
the processing device is programmed to control the gaseous pressure in the first tank via the relative sensor and drive the deactivation of the pump when such pressure falls below a pre-established threshold; and/or

the second tank is a partition of the internal volume of the first tank.

The invention will now be described in detail with reference to the annexed drawing, which illustrates a preferred embodiment, wherein
- fig. 1 shows a preferred embodiment of a winemaking apparatus,
- fig. 2 shows a preferred embodiment of winemaking apparatuses.

A winemaking apparatus 50 for a crushed vegetable, composed of must 90 and peel 92, is constituted of a casing 52 supported by optional legs 54. The must 90 upon fermenting produces a floating cap 92 of marc and/or solid parts, composed of the skins that, pushed by the fermentation CO₂, float.

The upper part or roof 55 of the tank 50 can be selectively connected, through a duct 66 and a valve 70, to an external gas accumulation tank 30. On the duct 66 there is also a pump or compressor 68. The pump 68 has the function of pumping inside the tank 30 fermentation gases generated in the tank 50, making sure that the gas pressure in the tank 30 is greater than that inside the roof 55 of the tank 50.

The tank 30 is in turn selectively connectable to the lower part of the tank 50 via a duct 76 and a valve 78. The duct 76 has a terminal portion 79 which penetrates inside the casing 52, so as to inject the gas at the center of the volume of must.

The ducts 76 and the valves 78 can be more than one for the fermentation tank 50, in order to have more gas injection points into the must 90. This turns out to be particularly advantageous for fermentation tanks of large capacity.

The length of the portion 79 is not essential. It's enough that, during the method steps, the portion 79 is always, also taking into account the expected level of the must 90, under the cap 92. At the end of the conduit 76 there can be installed anyway an adaptive adjustment system, e.g. a telescopic conduit 79 controllable from the outside to adjust the height of the outlet.

The system preferably further comprises an electronic device EU, e.g. a PLC, which is connected (see the arrows indicating electrical signal lines in the figure) to
a pressure sensor 80, which measures the gas pressure in the upper and empty part of the tank 50, and
a pressure sensor 84, which measures the pressure of the gas present inside the tank 30,
a (optional) bleed valve 60, mounted to reduce the pressure of the gas inside the tank 50,
the pump 68,
a valve 94, which controls the flow in a duct 98 which supplies, from a stock of inert gas, the tank 30, and
a valve 96, which controls the flow in a conduit 99 which supplies, from a stock of compressed air, the tank 30, and
the valve 78,
the valve 70 (optional) to allow gas flow from the tank 50 to the tank 30.

The valve 70 is e.g. of the "open/close" type, and could be replaced by a non-return valve, or simply even omitted if the pump 68 is hermetically sealed and prevents reflux of gas from the tank 30 to the fermentation tank 50.

The operation of the winemaker 50 can follow these preferred steps (preferably performed via software by the device EU):
(i) The tank 50 is filled with must 90.
(ii) After a certain time the must 90 upon fermenting generates gas and a solid cap 92. The valve 70 is commanded open, the valve 60 and the valve 78 are closed.
(iii) The pump 68 is activated to transfer an excess of fermentation gas inside the tank 30.
(iv) After a predetermined time, or after that in the tank 30 the desired pressure has been reached, the pump 68 is stopped, and the valve 70 is closed. The gas remains trapped under pressure in the tank 30, while the other tank 50 is depressurized (or degassed) by opening the valve 60.

The valve 60 can also adjust the pressure in the upper part of the tank 50. In this case it will act as a maintenance valve for the desired pressure in the tank 50.
(v) The valve 78 is opened and the gas spontaneously flows into the must 90 as an effect of the pressure differential between the pressure existing in the tank 30 and the hydrostatic head (plus possible gaseous pressure in the upper part of the tank 50) present at the injection point 79 internal to the same tank 50. The gas injected under pressure rises into the must 90 and interacts both with the same must 90 and with the cap 92, mixing them, oxygenating them or making them inert (depending on the gases or mixtures used), and in some cases breaking the cap (this depends on the volume of gas injected in a short period of time, anyway less than 60 seconds).

The pump 68 allows obtaining a gas overpressure in the tank 30 compared to that reached by fermentation only. The overpressure is such as to exceed the value of the hydrostatic head plus the gas pressure in the tank 50 at the injection point. It also allows collecting, storing it, a high quantity of CO₂ fermentation gas, a quantity depending on the size of the tank 30 and the maximum pressure reachable both by the pump 68 and by the tank 30.

Given the overpressure of the gas in the tank 30 obtainable with the pump 68, the step of depressurizing (or degassing) the tank 50 by opening the valve 60 is not strictly necessary. However, this step is advantageous because it amplifies the power of the gas injected into the tank 50 by reducing as desired the gaseous pressure inside the tank 50, the latter being able to be brought also at ambient pressure level equal to "0" relative bars.

The advantage of the valve 60, when it is open, is to allow the outflow of the gas injected into the must 90 towards the outside of the fermentation tank 50, avoiding undesired overpressure in the tank 50.

Generally, the pump 68 has the advantage of ensuring high injection pressures for the gas even if the gas initially has little or insufficient pressure. This is the case, for example, of large tanks, in which the hydrostatic head (the column of liquid) that the injected gas must overcome is considerable.

Another advantage of the pump 68 is to allow the construction of fermentation tanks 50 with relaxed specifications. It is not necessary that structurally the fermentation tank must withstand a very high internal gas pressure, the one needed to guarantee the gas injection, because the constraint shifts to the tank 30, which is smaller and contains no liquid.

Another advantage of the pump 68 is that it makes high-pressure storage of large quantities of inert natural gas possible, even in containers different from the tank 30. The gas can also be used during, for example, the maceration phase of winemaking, where there is no production of CO₂, or during other phases of the wine-production process (per example bottling) where the presence of inert gas is required. In this case the gas stored from the fermentation process will be opportunely purified from sugar residues or fermentative bacteria or moisture, and will constitute an important source of energy and economic savings for the winery.

The process steps described above are preferably controlled by the device EU.

Through reading and processing the data sent by the various sensors, the device EU can control the valves to perform the method steps when e.g. a maximum threshold pressure is reached inside the tank 50 and/or 30.

Each step of the winemaking process of the invention can be advantageously automated and/or programmed with the device EU. This allows e.g. setting periodic mixing cycles of the fermenting mass and, maybe, of breaking of the cap 92, of programming parameters of gas release in the tank 50 (such as the duration of the single discharge release or the duration of various consecutive pulses, the gas flow rate for each impulse, etc.).

The valves 94, 96 and the ducts 98, 99 are optional. But their presence is advantageous because by controlling the valves 94, 96 the gas in the tank 30 can be enriched with different gaseous components, to inject a suitable gas mixture inside the tank 50 and favor a specific type of fermentation.

Even if the vent valve 60 is not present, in the tank 30 gas can be accumulated at a sufficiently high pressure to inject gas in the tank 50 in a turbulent manner anyway.

The tank 30 can also be made internally or attached to the tank 50. E.g. the tank 30 can be a partition of the inner volume of the tank 50.

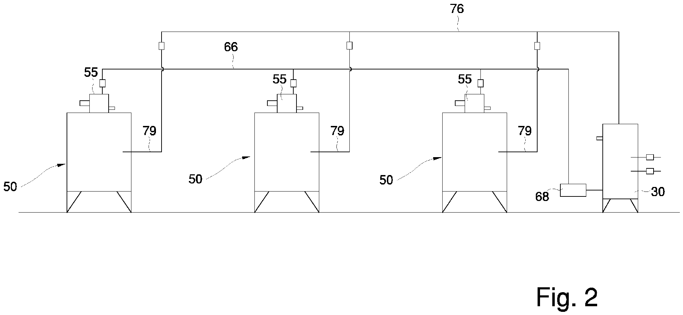

In a variant, see Fig. 2, the tank 30 can be connected to receive gas from, and/or send gas to, two or more tanks 50. Thus the tank 30 can receive and store pressurized gas from each tank 50 and/or send pressurized gas inside each tank 50.

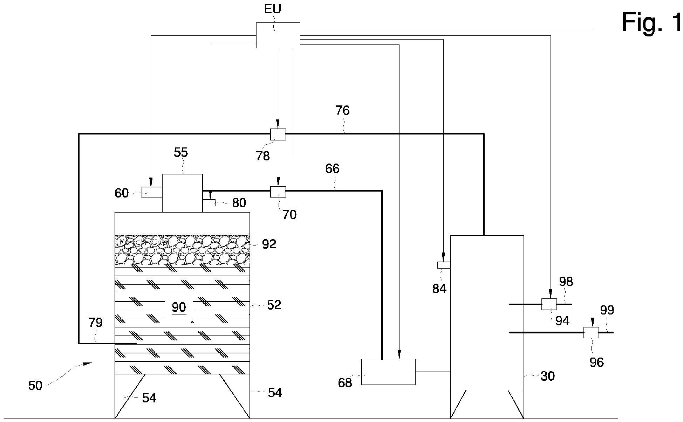

In fig. 2 equal reference numerals indicate equal parts, and for simplicity in the control unit EU the relative connections have been omitted. Each tank 50 operates with respect to the common tank 30 as explained for fig. 1.

## Claims

1. Method for the treatment of a vegetable product in the form of crushed material comprising the steps of
(i) storing the crushed material in a first tank (50) so as to let it ferment therein and form a cap (92) of solid parts floating on a liquid mass (90);
(ii) connecting a second tank (30) to the first to capture therein gaseous fermentation products generated inside the first tank;
(iii) connecting the second tank (30) to the first one (50) at a point under the cap so that, thanks to the pressure differential between the two tanks, the spontaneous transfer of gaseous products into the liquid mass occurs, so that while going up they hit the cap;
**characterized by** mechanically pumping the gaseous products generated in the first tank (50) into the second tank (30).

2. Method according to claim 1, wherein in step (iii) the gaseous pressure in the first tank (50) is lowered.

3. Method according to claim 2, wherein in step (iii) the gaseous pressure in the first tank (50) is lowered up to room pressure.

4. Method according to claim 2, wherein in step (iii) the gaseous pressure in the first tank (50) is lowered at an intermediate pressure between that of the second tank and the environment.

5. Method according to claim 1 or 2 or 3 or 4, wherein
the gaseous pressure in the first tank (50) is checked, and
the gaseous products generated in the first tank (50) are pumped into the second tank (30) when the gaseous pressure in the first tank exceeds a certain threshold pressure.

6. Method according to claim 1 or 2 or 3 or 4 or 5, wherein
the gaseous pressure in the first tank (50) is checked, and
the gaseous products generated in the first tank (50) are pumped into the second tank (30) until the gaseous pressure in the first tank falls below a certain threshold pressure.

7. Method according to any one of the preceding claims, wherein the gaseous pressure in the second tank (30) is checked and step (iii) is carried out when such pressure exceeds a predetermined threshold.

8. Apparatus for the treatment of a vegetable product in the form of crushed material, useful for carrying out the method of one of the preceding claims, comprising:
- a first tank (50) to contain the crushed material (90; 92) and a second tank (30) for collection of gaseous products generated in the first tank (50) by the fermentation of the crushed material,
- a first pipe system (66) adapted for putting into communication a part (55) of the first tank (50), where the gaseous products accumulate, with the second tank (30) so that the gaseous products can be transferred into the second tank (30),
- a second pipe system (76) adapted for putting into communication the second (30) and the first tank (50), the system having an outlet (79) inside the first tank (50) where in use the liquid mass of the crushed material is,
- first and second valve means (70, 78) respectively associated with the first and second pipe system (66, 76) for selectively making the two tanks (30, 50) communicating conditionally to the open/closed state of said means;
**characterized by** comprising
a mechanical pump or means (68) for pumping the gaseous products generated in the first tank into the second tank.

9. Apparatus according to claim 8, comprising third valve means (60) for venting the first tank (50) towards the outside.

10. Apparatus according to any one of the preceding claims, comprising a programmable processing device (EU) programmed to drive the valve means (70, 78) and the pump (68) so as to perform, after the loading of a vegetable product in the form of crushed material into the first tank (50), the steps of
connecting the second tank (30) to the first (50) by opening the first valve means (70);
activating the pump or means (68) to transfer gaseous products from the first (50) to the second tank (30),
closing the first valve means (70);
opening the second valve means (78) to connect the second tank (30) to the first (50) so that spontaneous transfer of the gaseous products into the liquid mass of the crushed material takes place.

11. Apparatus according to claim 9 and 10, wherein the processing device (EU) is programmed to decrease the gaseous pressure in the first tank (50) by operating the third valve means (60) before opening the second valve means (78).

12. Apparatus according to claims 10 or 11, wherein the processing device (EU) is interfaced with a pressure sensor (80) adapted for measuring the gas pressure in the first tank (50).

13. Apparatus according to claims 10 or 11 or 12, wherein the processing device (EU) is interfaced with a pressure sensor (80) adapted for measuring the pressure of the gas present in the second tank (30).

14. Apparatus according to claim 12 or 13, wherein the processing device (EU) is programmed to control the gaseous pressure in the second tank (30) by means of the relative sensor and to drive the opening of the second valve means (78) when said pressure reaches or exceeds a pre-established threshold.

## Patentansprüche

1. Verfahren zur Behandlung eines pflanzlichen Produkts in Form von zerkleinertem Material, das die folgenden Schritte umfasst
(i) Lagerung des zerkleinerten Materials in einem ersten Tank (50), um es darin gären zu lassen und eine Kappe (92) aus festen Teilen zu bilden, die auf einer flüssigen Masse (90) schwimmen;
(ii) Anschluss eines zweiten Tanks (30) an den ersten, um darin gasförmige Gärungsprodukte aufzufangen, die im ersten Tank erzeugt werden;
(iii) Verbinden des zweiten Behälters (30) mit dem ersten (50) an einem Punkt unterhalb des Deckels, so dass dank des Druckunterschieds zwischen den beiden Behältern der spontane Übergang der gasförmigen Produkte in die flüssige Masse erfolgt, so dass sie beim Aufsteigen auf den Deckel treffen;
**dadurch gekennzeichnet, dass** die im ersten Tank (50) erzeugten gasförmigen Produkte mechanisch in den zweiten Tank (30) gepumpt werden.

2. Verfahren nach Anspruch 1, wobei in Schritt (iii) der Gasdruck im ersten Tank (50) abgesenkt wird.

3. Verfahren nach Anspruch 2, wobei in Schritt (iii) der Gasdruck im ersten Tank (50) bis auf Raumdruck abgesenkt wird.

4. Verfahren nach Anspruch 2, wobei in Schritt (iii) der Gasdruck im ersten Tank (50) auf einen Zwischendruck zwischen dem des zweiten Tanks und der Umgebung abgesenkt wird.

5. Verfahren nach Anspruch 1 oder 2 oder 3 oder 4, wobei der Gasdruck im ersten Tank (50) kontrolliert wird und die im ersten Tank (50) erzeugten gasförmigen Produkte in den zweiten Tank (30) gepumpt werden, wenn der Gasdruck im ersten Tank einen bestimmten Schwellendruck überschreitet.

6. Verfahren nach Anspruch 1 oder 2 oder 3 oder 4 oder 5, wobei
der Gasdruck im ersten Tank (50) kontrolliert wird und
die im ersten Tank (50) erzeugten gasförmigen Produkte in den zweiten Tank (30) gepumpt werden, bis der Gasdruck im ersten Tank unter einen bestimmten Schwellendruck fällt.

7. Verfahren nach einem der vorhergehenden Ansprüche, wobei der Gasdruck im zweiten Tank (30) überprüft und Schritt (iii) ausgeführt wird, wenn dieser Druck einen vorgegebenen Schwellenwert überschreitet.

8. Vorrichtung zur Behandlung eines pflanzlichen Produkts in Form von zerkleinertem Material, die zur Durchführung des Verfahrens nach einem der vorhergehenden Ansprüche nützlich ist, umfassend:
- einen ersten Tank (50) zur Aufnahme des zerkleinerten Materials (90; 92) und einen zweiten Tank (30) zum Sammeln von gasförmigen Produkten, die in dem ersten Tank (50) durch die Fermentation des zerkleinerten Materials erzeugt werden,
- ein erstes Rohrsystem (66), das geeignet ist, einen Teil (55) des ersten Behälters (50), in dem sich die gasförmigen Produkte ansammeln, mit dem zweiten Behälter (30) in Verbindung zu bringen, so dass die gasförmigen Produkte in den zweiten Behälter (30) überführt werden können,
- ein zweites Rohrsystem (76), das geeignet ist, den zweiten (30) und den ersten Tank (50) miteinander zu verbinden, wobei das System einen Auslass (79) im Inneren des ersten Tanks (50) aufweist, in dem sich im Gebrauch die flüssige Masse des zerkleinerten Materials befindet,
- eine erste und eine zweite Ventileinrichtung (70, 78), die jeweils mit dem ersten und dem zweiten Leitungssystem (66, 76) verbunden sind, um die beiden Tanks (30, 50) selektiv in Abhängigkeit vom geöffneten/geschlossenen Zustand der genannten Einrichtungen in Verbindung zu bringen;
**dadurch gekennzeichnet,**
**dass** sie umfasst eine mechanische Pumpe oder Einrichtung (68) zum Pumpen der im ersten Tank erzeugten gasförmigen Produkte in den zweiten Tank.

9. Vorrichtung nach Anspruch 8, mit einer dritten Ventileinrichtung (60) zum Entlüften des ersten Tanks (50) nach außen.

10. Vorrichtung nach einem der vorhergehenden Ansprüche, die eine programmierbare Verarbeitungsvorrichtung (EU) umfasst, die so programmiert ist, dass sie die Ventileinrichtungen (70, 78) und die Pumpe (68) ansteuert, um nach dem Laden eines pflanzlichen Produkts in Form von zerkleinertem Material in den ersten Tank (50) die folgenden Schritte auszuführen;
Verbindung des zweiten Tanks (30) mit dem ersten (50) durch Öffnen des ersten Ventils (70);
Aktivierung der Pumpe oder des Mittels (68), um gasförmige Produkte vom ersten (50) zum zweiten Tank (30) zu befördern,
Schließen des ersten Ventils (70);
Öffnen der zweiten Ventileinrichtung (78), um den zweiten Tank (30) mit dem ersten (50) zu verbinden, so dass ein spontaner Übergang der gasförmigen Produkte in die flüssige Masse des zerkleinerten Materials stattfindet.

11. Vorrichtung nach Anspruch 9 und 10, wobei die Verarbeitungsvorrichtung (EU) so programmiert ist, dass sie den Gasdruck im ersten Tank (50) durch Betätigung der dritten Ventileinrichtung (60) vor dem Öffnen der zweiten Ventileinrichtung (78) verringert.

12. Vorrichtung nach Anspruch 10 oder 11, wobei die Verarbeitungsvorrichtung (EU) mit einem Drucksensor (80) verbunden ist, der zur Messung des Gasdrucks im ersten Tank (50) geeignet ist.

13. Vorrichtung nach Anspruch 10 oder 11 oder 12, wobei die Verarbeitungsvorrichtung (EU) mit einem Drucksensor (80) verbunden ist, der zur Messung des Drucks des im zweiten Tank (30) vorhandenen Gases geeignet ist.

14. Vorrichtung nach Anspruch 12 oder 13, wobei die Verarbeitungsvorrichtung (EU) so programmiert ist, dass sie den Gasdruck im zweiten Tank (30) mittels des Relativsensors kontrolliert und die Öffnung der zweiten Ventileinrichtung (78) steuert, wenn der Druck einen vorher festgelegten Schwellenwert erreicht oder überschreitet.

## Revendications

1. Méthode de traitement d'un produit végétal sous forme de matériau broyé comprenant les étapes suivantes:
(i) stocker la matière broyée dans un premier réservoir (50) afin de la laisser fermenter et former un chapeau (92) de parties solides flottant sur une masse liquide (90) ;
(ii) connecter un second réservoir (30) au premier pour y capturer les produits de fermentation gazeux générés à l'intérieur du premier réservoir ;
(iii) relier le deuxième réservoir (30) au premier (50) en un point situé sous le bouchon de sorte que, grâce à la différence de pression entre les deux réservoirs, le transfert spontané des produits gazeux dans la masse liquide se produise, de sorte qu'en remontant ils heurtent le bouchon ;
**caractérisé par** le pompage mécanique des produits gazeux générés dans le premier réservoir (50) dans le second réservoir (30).

2. Méthode selon la revendication 1, dans laquelle, à l'étape (iii), la pression gazeuse dans le premier réservoir (50) est abaissée.

3. Méthode selon la revendication 2, dans laquelle, à l'étape (iii), la pression gazeuse dans le premier réservoir (50) est abaissée jusqu'à la pression ambiante.

4. Procédé selon la revendication 2, dans lequel, à l'étape (iii), la pression gazeuse dans le premier réservoir (50) est abaissée à une pression intermédiaire entre celle du second réservoir et celle de l'environnement.

5. Méthode selon la revendication 1 ou 2 ou 3 ou 4, dans laquelle
la pression des gaz dans le premier réservoir (50) est vérifiée, et
les produits gazeux générés dans le premier réservoir (50) sont pompés dans le second réservoir (30) lorsque la pression gazeuse dans le premier réservoir dépasse un certain seuil de pression.

6. Méthode selon la revendication 1 ou 2 ou 3 ou 4 ou 5, dans laquelle
la pression des gaz dans le premier réservoir (50) est vérifiée, et
les produits gazeux générés dans le premier réservoir (50) sont pompés dans le second réservoir (30) jusqu'à ce que la pression gazeuse dans le premier réservoir tombe en dessous d'un certain seuil de pression.

7. Procédé selon l'une quelconque des revendications précédentes, dans lequel la pression gazeuse dans le second réservoir (30) est contrôlée et l'étape (iii) est réalisée lorsque cette pression dépasse un seuil prédéterminé.

8. Appareil de traitement d'un produit végétal sous forme de broyat, utile pour la mise en oeuvre du procédé de l'une des revendications précédentes, comprenant:
- un premier réservoir (50) pour contenir la matière broyée (90 ; 92) et un second réservoir (30) pour collecter les produits gazeux générés dans le premier réservoir (50) par la fermentation de la matière broyée,
- un premier système de tuyauterie (66) adapté pour mettre en communication une partie (55) du premier réservoir (50), où s'accumulent les produits gazeux, avec le second réservoir (30) afin que les produits gazeux puissent être transférés dans le second réservoir (30),
- un second système de tuyauterie (76) adapté pour mettre en communication le second (30) et le premier réservoir (50), le système ayant une sortie (79) à l'intérieur du premier réservoir (50) où, en cours d'utilisation, se trouve la masse liquide du matériau concassé,
- un premier et un second moyen de vanne (70, 78) respectivement associés au premier et au second système de tuyaux (66, 76) pour rendre sélectivement les deux réservoirs (30, 50) communicants en fonction de l'état ouvert/fermé de ces moyens;
**caractérisé par le fait qu'**il comprend
une pompe ou un moyen mécanique (68) pour pomper les produits gazeux générés dans le premier réservoir vers le deuxième réservoir.

9. Appareil selon la revendication 8, comprenant un troisième moyen de soupape (60) pour ventiler le premier réservoir (50) vers l'extérieur.

10. Appareil selon l'une quelconque des revendications précédentes, comprenant un dispositif de traitement programmable (EU) programmé pour piloter les moyens de vannes (70, 78) et la pompe (68) afin d'effectuer, après le chargement d'un produit végétal sous forme de matière broyée dans le premier réservoir (50), les étapes suivantes :
connecter le second réservoir (30) au premier (50) en ouvrant la première vanne (70);
activer la pompe ou le moyen (68) pour transférer les produits gazeux du premier (50) au second réservoir (30),
fermer le premier moyen de soupape (70);
l'ouvrir la deuxième vanne (78) pour relier le deuxième réservoir (30) au premier (50) de manière à ce que le transfert spontané des produits gazeux dans la masse liquide du matériau broyé s'effectue.

11. Appareil selon les revendications 9 et 10, dans lequel le dispositif de traitement (UE) est programmé pour diminuer la pression gazeuse dans le premier réservoir (50) en actionnant le troisième moyen de soupape (60) avant d'ouvrir le deuxième moyen de soupape (78).

12. Appareil selon les revendications 10 ou 11, dans lequel le dispositif de traitement (UE) est interfacé avec un capteur de pression (80) adapté pour mesurer la pression du gaz dans le premier réservoir (50).

13. Appareil selon les revendications 10 ou 11 ou 12, dans lequel le dispositif de traitement (UE) est interfacé avec un capteur de pression (80) adapté pour mesurer la pression du gaz présent dans le second réservoir (30).

14. Appareil selon la revendication 12 ou 13, dans lequel le dispositif de traitement (UE) est programmé pour contrôler la pression gazeuse dans le second réservoir (30) au moyen du capteur relatif et pour commander l'ouverture du second moyen de soupape (78) lorsque ladite pression atteint ou dépasse un seuil préétabli.
